# DEMANDE DE BREVET EUROPEEN

(11) **EP 2 860 094 A1**
(43) Date de publication de la demande: **15.04.2015**
(21) Numéro de dépôt: 14187795.1
(22) Date de dépôt: 06.10.2014
(51) Int. Cl.: B62K 19/36, B62K 21/24, B62K 25/02

(54) **Dispositif de fixation d'un élément de cycle détachable sur un cycle, et utilisation d'un tel dispositif**

(30) Priorité: 10.10.2013 FR 1359853
(71) Demandeur: Look Cycle International, 58000 Nevers (FR)
(72) Inventeur: Bigard, Pierre, 60110 Meru (FR)
(74) Mandataire: Petit, Maxime

(57) **Abrégé**

Le dispositif de fixation d'un élément de cycle détachable comporte des moyens de serrage comprenant au moins un organe de serrage (8) déplaçable entre une position de serrage pour la fixation de l'élément de cycle (1) et une position de desserrage pour la libération de l'élément de cycle, et des moyens de tension (11, 12) agissant sur ledit organe de serrage pour le déplacement de celui-ci vers lesdites positions de serrage et de desserrage. Les moyens de tension (11, 12) comportent un élément souple (11) relié audit organe de serrage, et un organe d'enroulement (12) de l'élément souple (11).

Ce dispositif de fixation peut avantageusement être utilisé pour fixer un élément de cycle tel qu'une tige de selle, une roue ou un guidon sur un cycle.

## Description

La présente invention concerne un dispositif de fixation destiné à la fixation d'un élément de cycle détachable sur un cycle.

L'élément de cycle en question est une pièce rapportée telle qu'une tige de selle pouvant être fixée dans un tube de selle d'un cadre de cycle, une roue pouvant être fixée à un cadre de cycle ou à une fourche de cycle, ou un guidon pouvant être fixé à une potence de cycle, elle-même reliée à un tube pivot de fourche monté rotatif dans un tube de direction du cadre de cycle.

La tige de selle a pour fonction de relier une selle à un cadre de cycle et elle comporte à une extrémité supérieure un dispositif de fixation d'une selle à la tige, et à une extrémité inférieure un dispositif de fixation de la tige au cadre. Le dispositif de fixation de la selle à la tige ne se rapporte pas à l'invention et ne sera pas décrit en détail.

Le dispositif de fixation de la tige de selle au cadre comprend des moyens de serrage qui, lorsqu'ils sont desserrés, permettent de faire glisser la tige de selle à l'intérieur d'un tube de selle du cadre afin de régler la hauteur de la tige de selle.

Les moyens de serrage peuvent de manière classique comprendre un collier de serrage fendu fixé à l'extrémité haute fendue du tube de selle. Les extrémités du collier de serrage sont pourvues de pattes pouvant être rapprochées l'une de l'autre à l'aide d'une liaison à vis et à écrou pour ainsi serrer l'extrémité haute du tube de selle autour de la tige de selle pour fixer celle-ci à la hauteur souhaitée.

Par ailleurs, l'extrémité haute fendue du tube de selle peut toute seule faire fonction de collier de serrage en étant pourvue de deux pattes de fixation analogues disposées de part et d'autre de la fente du tube de selle.

On connaît également d'autres dispositifs de fixation comportant des moyens de serrage associés directement à la tige de selle pour agir à l'intérieur du tube de selle. Ainsi, certains moyens de serrage comprennent un moyen de tension sous forme d'une longue vis s'étendant à l'intérieur de la tige de selle sur pratiquement toute la longueur de celle-ci pour coopérer avec un organe de serrage disposé à l'extrémité basse de la tige de selle.

Selon une variante, l'organe de serrage est une pièce d'extrémité biseautée comportant un trou central taraudé recevant la vis. Cette pièce d'extrémité coopère avec l'extrémité basse de la tige de selle, également biseautée, de manière à former un coin lors du serrage de la vis pour être déplacé entre une position de serrage, en appui contre la face intérieure du tube de selle, et une position de desserrage.

Selon une autre variante, l'organe de serrage est une plaque à trou central taraudé disposée à l'extrémité basse de la tige de selle et coopérant avec la vis. La tige de selle est entourée par au moins un et de préférence plusieurs anneaux en un matériau élastiquement expansible qui, lorsqu'ils sont comprimés, s'élargissent latéralement contre la paroi intérieure du tube de selle de manière à fixer la tige de selle. Pour l'utilisation de plusieurs anneaux de ce genre, des entretoises annulaires rigides sont de préférence disposés entre deux anneaux successifs.

Pour obtenir un serrage efficace, il est cependant nécessaire d'utiliser une vis qui non seulement est très longue, mais qui en outre présente un gros diamètre. Par conséquent, le poids de la vis est relativement important, ce qui est un inconvénient dans la tendance générale qui vise à réduire le poids des composants du cycle au maximum, en particulier pour les cycles de compétition.

Un agencement similaire est utilisé pour les dispositifs de fixation des roues de cycle sur un cadre de cycle ou sur une fourche de cycle. Ainsi, la roue est habituellement serrée à la fourche par un axe passant au travers du moyeu de roue. Cet axe est à ses extrémités filetées pourvu de dispositifs de fixation comportant des moyens de serrage par écrou, ou par came pour les serrages rapides.

Un dispositif de fixation est également utilisé pour la fixation d'autres éléments de cycle comme par exemple un guidon qui doit être fixé de manière détachable à l'extrémité avant d'une potence de cycle.

Cependant, l'invention n'est pas limitée aux éléments de cycle mentionnés ci-dessus.

Le but de l'invention est de proposer un dispositif de fixation pour la fixation détachable d'un élément de cycle qui remédie aux inconvénients des dispositifs de fixation connus de ce genre en étant très léger, simple, facile à manoeuvrer, et assurant une fixation fiable par serrage.

Un objet de l'invention est un dispositif de fixation d'un élément de cycle détachable sur un cycle, comportant des moyens de serrage comprenant au moins un organe de serrage déplaçable entre une position de serrage pour la fixation de l'élément de cycle et une position de desserrage pour la libération de l'élément de cycle, et des moyens de tension comportant un élément souple agissant sur ledit organe de serrage pour le déplacement de celui-ci vers lesdites positions de serrage et de desserrage, caractérisé en ce que lesdits moyens de tension comportent en outre un organe d'enroulement de l'élément souple auquel est fixée une extrémité dudit élément souple, ledit organe d'enroulement étant apte à être mis en rotation dans un premier sens pour enrouler un tronçon de l'élément souple autour de l'organe d'enroulement et tirer ledit organe de serrage vers la position de serrage, et en rotation dans un deuxième sens inverse du premier sens pour dérouler ledit tronçon et provoquer le déplacement dudit organe de serrage vers la position de desserrage.

Selon d'autres caractéristiques de l'invention :
- ledit organe d'enroulement est intégré dans ledit élément de cycle ;
- ledit organe d'enroulement est un corps cylindrique ;
- l'élément souple s'étend sur un palan comprenant au moins un organe de renvoi fixé sur ledit au moins un organe de serrage ;
- ledit organe d'enroulement est associé à un dispositif de verrouillage disposé à une extrémité dite extérieure de l'organe d'enroulement et permettant de verrouiller l'organe d'enroulement dans ladite position de serrage ;
- ledit dispositif de verrouillage est un dispositif à cliquet ;
- ledit dispositif à cliquet comporte un anneau cranté monté solidaire en rotation avec l'organe d'enroulement et pouvant venir en prise avec un évidement cranté prévu dans un support d'extrémité de l'organe d'enroulement afin de verrouiller celui-ci dans ladite position de serrage ;
- ledit anneau cranté est constamment sollicité axialement par un moyen élastique pour être en prise avec ledit évidement cranté, ledit moyen élastique prenant d'une part appui sur un flasque de l'organe d'enroulement et d'autre part sur une face arrière dudit anneau cranté ;
- ledit moyen élastique est un ressort ;
- ledit anneau cranté peut être déplacé axialement de sa prise avec ledit évidement cranté par une force d'appui appliquée par un utilisateur sur la face avant dudit anneau cranté de manière à comprimer ledit moyen élastique ;
- ladite extrémité extérieure de l'organe d'enroulement présente une empreinte de clé apte à recevoir une clé pour l'application de ladite force d'appui sur un élément transversal porté par l'anneau cranté ; et
- ledit élément transversal est une goupille dont les extrémités sont logées dans deux évidements de réception diamétralement opposés de l'anneau cranté en s'étendant dans une fente longitudinale traversant radialement ladite empreinte de clé de l'organe d'enroulement.

Un autre objet de l'invention est une utilisation du dispositif de fixation dans laquelle l'élément de cycle est un élément de cycle quelconque devant être fixé de manière détachable à un cycle. Un tel élément de cycle est par exemple une tige de selle devant être fixé sur un tube de selle d'un cadre de cycle, ou dans laquelle l'élément de cycle est une roue devant être fixé sur un cadre de cycle ou sur une fourche de cycle, ou bien dans laquelle l'élément de cycle est un guidon devant être fixé à une potence de cycle.

D'autres caractéristiques et avantages de l'invention ressortiront de la description qui va suivre de plusieurs modes de réalisation non limitatifs de l'invention, en référence aux figures annexées dans lesquelles :
- la figure 1 est une vue en perspective d'une tige de selle pourvu du dispositif de fixation détachable selon l'invention ;
- la figure 2 est une vue en coupe longitudinale de la tige de selle de la figure 1 et d'un tube de selle illustrant un premier mode de réalisation de l'invention ;
- la figure 3 est une vue en coupe longitudinale de la tige de selle de la figure 1 et d'un tube de selle illustrant une variante du premier mode de réalisation de la figure 2;
- la figure 4 est une vue en coupe longitudinale de la tige de selle de la figure 1 et d'un tube de selle illustrant encore une variante du premier mode de réalisation de la figure 2;
- la figure 5 est une vue en coupe longitudinale d'une tige de selle et d'un tube de selle illustrant une variante du premier mode de réalisation de l'invention ;
- la figure 6 est une vue en coupe longitudinale d'une tige de selle et d'un tube de selle illustrant encore une variante du premier mode de réalisation de l'invention ;
- la figure 7 est une vue éclatée en perspective illustrant un organe d'enroulement d'un élément souple et un dispositif de verrouillage selon l'invention ;
- la figure 8 est une vue en perspective montrant séparément l'organe d'enroulement de la figure 7 ;
- la figure 9 est une vue en perspective illustrant l'organe d'enroulement et le dispositif de verrouillage de la figure 6, après assemblage ;
- la figure 10 est une vue en perspective montrant l'aspect extérieur d'un dispositif de verrouillage selon l'invention ;
- la figure 11 est une vue éclatée en perspective illustrant un organe d'enroulement d'un élément souple et une variante du dispositif de verrouillage de la figure 7 ;
- la figure 12 est une vue en perspective illustrant l'organe d'enroulement et le dispositif de verrouillage de la figure 11, après assemblage ;
- les figures 13 à 16 sont des vues en perspective illustrant un deuxième mode de réalisation du dispositif de fixation pour une roue de cycle ; et
- la figure 17 est une vue en perspective illustrant un troisième mode de réalisation du dispositif de fixation d'un guidon à l'extrémité avant d'une potence de cycle.

Dans les figures, les éléments identiques ou équivalents porteront les mêmes signes de référence.

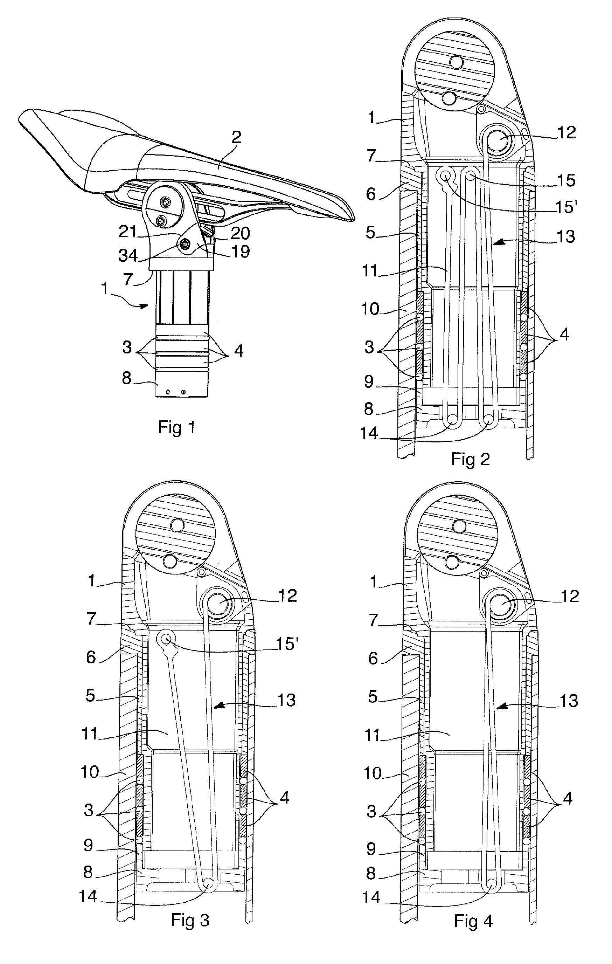

Les figures 1 et 2 montrent une tige de selle 1 pourvue d'un dispositif de fixation selon l'invention. La tige de selle 1 porte une selle 2 et dans l'exemple illustré, plusieurs anneaux 3 en un matériau expansible, tel qu'un élastomère, sont enfilés sur la partie inférieure la tige de selle 1 qui présente une section réduite.

Une entretoise annulaire en un matériau rigide 4 est disposée entre deux anneaux successifs 3 et une troisième entretoise est disposée entre un anneau supérieur 3 et une butée sur le corps de la tige de selle 1.

La tige de selle 1 se termine vers le bas par un organe de serrage 8 formé par une plaque qui sur sa face tournée vers les anneaux 3 porte une conformation annulaire 9 en appui contre l'anneau inférieur 3.

L'ensemble formé par la tige de selle 1, les anneaux 3, les entretoises 4 et l'organe de serrage 8, est insérée dans un tube de selle 10 (voir figure 2) pour y être fixée à une hauteur choisie par le cycliste.

Dans ce but, l'organe de serrage 8 peut être déplacé entre une position de serrage pour la fixation de l'élément de cycle qui ici est donc la tige de selle, et une position de desserrage pour la libération de cet élément de cycle.

L'organe de serrage 8 peut être déplacé vers la position de serrage en étant tiré vers le haut par des moyen de reliés à l'organe de serrage, en comprimant les anneaux 3 qui alors s'élargissent latéralement sur toute leur périphérie contre la paroi intérieure du tube de selle 10 de manière à fixer la tige de selle 1 à la hauteur choisie.

Selon une caractéristique importante de l'invention, les moyens de tension comportent un élément souple 11 et un organe d'enroulement 12 monté rotatif par rapport à la tige de selle 1 et sur lequel la deuxième extrémité de l'élément souple 11 peut être enroulée. L'organe d'enroulement 12 peut être mis en rotation pour enrouler un tronçon de l'élément souple 11 de manière à tirer l'organe de serrage 8 vers le haut en comprimant les anneaux 3.

L'élément souple 11 selon l'invention peut être formé par un câble, une bande ou par une corde en un matériau non extensible, comme par exemple en aramide.

L'organe d'enroulement 12 illustré dans cet exemple est un corps cylindrique, mais il peut également avoir la forme d'une came (non représentée) pour avoir un serrage respectivement desserrage en un seul tour, faible au début puis fort à la fin, avec des paliers suivant le profil de la came.

Dans le mode de réalisation relatif à une tige de selle 1, l'organe d'enroulement 12 est intégré dans celle-ci en s'étendant transversalement dans la partie supérieure de cette dernière.

Dans le mode de réalisation illustré à la figure 2, l'élément souple 11 s'étend sur un palan 13 comprenant dans cet exemple deux organes de renvoi 14 fixés sur l'organe de serrage 8 et un organe de renvoi 15 fixée dans la tige de selle 1. L'élément souple 11 est à une de ses extrémité fixé à un point de fixation 15' également prévu à l'intérieur de la tige de selle 1. De cette manière est obtenue une augmentation de la force de tension et donc de serrage.

La figure 3 montre une variante simplifiée du palan de la figure 2 dans laquelle un seul organe de renvoi 14 est fixé sur l'organe de serrage 8.

La figure 4 montre encore une variante du palan de la figure 2 dans laquelle également un seul organe de renvoi 14 est fixé sur l'organe de serrage 8, alors que les deux extrémités de l'élément souple 11 sont fixées à l'organe d'enroulement 12 en formant une boucle.

En absence d'un tel palan, l'une des extrémités de l'élément souple 11 peut être fixée directement à l'organe de serrage 8 par tout moyen convenable, par exemple par un noeud, un sertissage, un collage, une épissure.

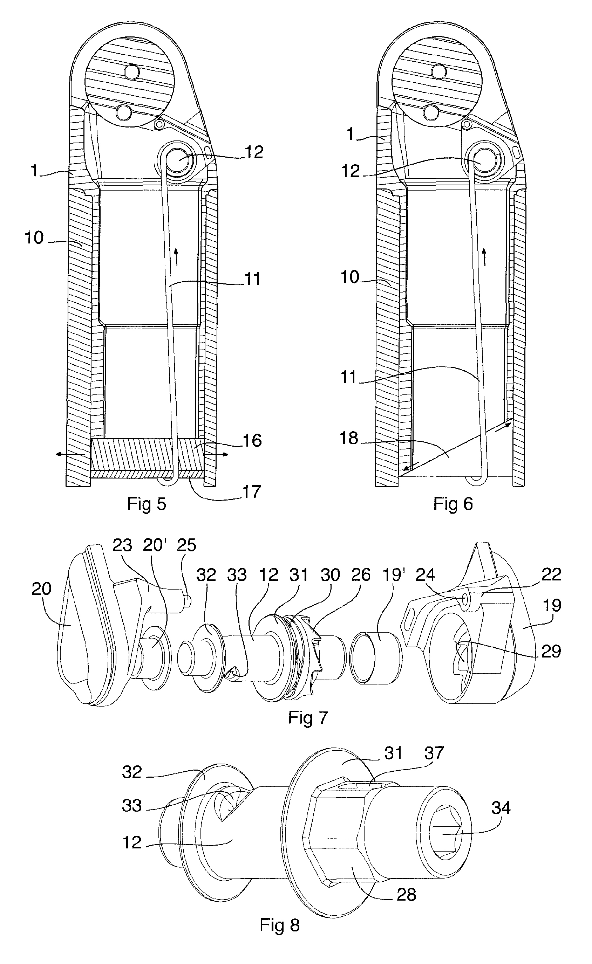

La figure 5 montre une variante du mode de réalisation décrit en référence à la figure 2. Dans cette variante, une pièce d'extrémité en matériau expansible 16, analogue aux anneaux 3 de la figure 2, est disposée à l'extrémité basse de celle-ci, en refermant l'intérieur de la tige de selle vers le bas. En variante, cette pièce d'extrémité peut être annulaire.

L'organe de serrage est formé par une plaque rigide 17 en appui contre la face extérieure de la pièce extrémité et à laquelle une des extrémités de l'élément souple 11 est fixée par tout moyen convenable, par exemple par un noeud, un sertissage, un collage, une épissure.

Aussi bien la pièce d'extrémité 16 que la plaque 17 sont adaptées à la forme intérieure du tube de selle 10 pour être insérées avec la tige de selle 1 dans celui-ci.

L'élément souple 11 peut être enroulé sur l'organe d'enroulement 12 de manière à tirer la plaque 17 vers le haut pour comprimer la pièce d'extrémité expansible 16 contre la face d'extrémité annulaire de la tige de selle. La pièce d'extrémité 16 s'élargie alors latéralement sur toute sa périphérie contre la paroi intérieure du tube de selle 10 de manière à y fixer la tige de selle 1.

La figure 6 montre encore une variante du mode de réalisation décrit en référence à la figure 2. Dans cette variante, l'organe de serrage est formé par une pièce d'extrémité en un matériau rigide 18 disposée à l'extrémité basse de la tige de selle et présentant une face biseautée en appui contre l'extrémité de la tige de selle, également biseautée.

Une des extrémités de l'élément souple 11 est fixée à la pièce d'extrémité 18 par tout moyen convenable de manière à effectuer une force de tension sur celle-ci lorsque l'élément souple 11 est enroulé sur l'organe d'enroulement 12. La pièce d'extrémité 18 fait alors fonction de coin en glissant contre la surface d'extrémité biseauté de la tige de selle 1 pour coincer la tige de selle à l'intérieur du tube de selle 10.

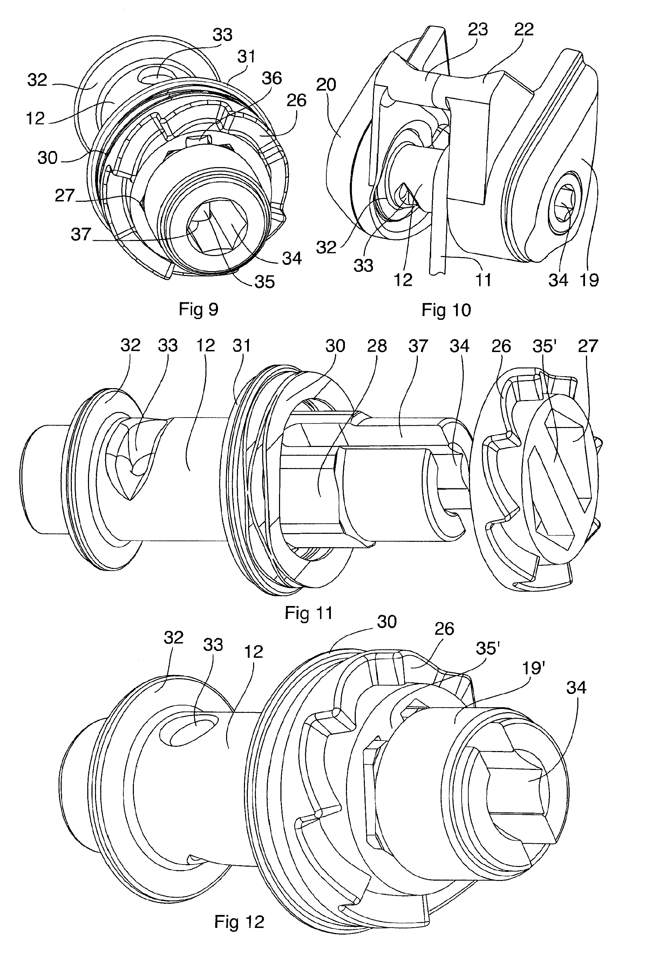

L'organe d'enroulement 12 est monté rotatif entre deux supports d'extrémité 19, 20 (voir en particulier les figures 7 et 10). Les supports d'extrémité 19, 20 sont reçus dans une encoche 21 prévue à l'extrémité haute de la tige de selle 1 (voir figure 1). Les supports d'extrémité 19, 20 sont relié l'un à l'autre par des protubérances excentrées respectives en L 22, 23 qui portent respectivement un organe femelle 24 et un organe male 25 coopérant l'un avec l'autre pour l'assemblage des supports d'extrémité (voir figure 10).

Les supports d'extrémité 19, 20 forment des porte-paliers pour un palier respectif 19', 20' enfilé sur une extrémité respective de l'organe d'enroulement 12 (voir figure 7).

Les figures 7 à 10 montrent en outre un dispositif de verrouillage permettant de verrouiller l'organe d'enroulement 12 lorsque l'organe de serrage 8 se trouve dans une position de serrage et l'élément souple 11 est par conséquent tendu.

Dans l'exemple illustré sur les figures 7 à 10, le dispositif de verrouillage est un dispositif à cliquet comportant un anneau cranté 26 (voir figures 7 et 9) solidaire en rotation avec l'organe d'enroulement 12 par complémentarité des formes. Dans ce but, l'anneau cranté 26 présente dans l'exemple illustré un trou central hexagonal 27 coopérant avec une conformation hexagonale 28 prévue sur l'organe d'enroulement 12.

L'anneau cranté 26 est constamment sollicité vers l'extérieur par un moyen élastique pour être en prise avec un évidement coaxial cranté 29 (voir figure 7) et ainsi verrouiller la rotation de l'organe d'enroulement 12 par rapport aux pièces d'extrémité 19, 20.

Dans l'exemple illustré, ce moyen élastique comporte une rondelle ondulée 30 prenant appui d'un côté contre l'anneau cranté 26 et de l'autre côté contre un (31) des deux flasques 31, 32 qui délimitent une zone d'enroulement sur l'organe d'enroulement 12. Cette zone d'enroulement présente un trou traversant 33 pour la fixation de l'élément souple 11.

L'organe d'enroulement 12 est à son extrémité dirigée vers l'évidement cranté 29 pourvu d'une empreinte de clé sous forme d'un trou central 34 formant une empreinte de clé qui dans l'exemple illustré est défini par un trou à six pans (voir figures 7 et 9) formant une empreinte de clé apte à recevoir une clé de forme complémentaire (non représentée). Ainsi, en faisant ici tourner l'organe d'enroulement 12 dans le sens des aiguilles d'une montre, le ressort 30 est momentanément comprimé par les crans glissants les uns sur les autres pour permettre une rotation d'un cran au suivant dans l'évidement cranté 29 pour ainsi tendre l'élément souple 11 de manière à déplacer l'organe de serrage 8 vers sa position de serrage.

Pour ensuite dérouler l'élément souple 11 de l'organe d'enroulement 12, en faisant tourner celui-ci dans le sens inverse, il faudra maintenir le ressort 30 comprimé de manière à sortir l'anneau cranté 26 entièrement de sa prise avec l'évidement cranté 29 le temps de la rotation dans le sens inverse.

Dans ce but, le ressort 30 peut être maintenu comprimé à l'aide d'une clé ou autre outil introduit dans l'empreinte de clé 34 pour l'application d'une force d'appui sur un élément transversal 35 porté par l'anneau cranté.

Selon un mode de réalisation du dispositif de verrouillage, l'élément transversal 35 comporte une goupille 35 (voir figure 9) dont les extrémités sont logées dans deux évidements de réception diamétralement opposés 36 sur la face extérieure de l'anneau cranté 26 et dont un seul est montré à la figure 9. La goupille 35 s'étend au travers d'une fente 37 s'étendant diamétralement dans l'organe d'enroulement 12 en traversant le trou à six pans 34 de manière à être accessible à la clé de manoeuvre à six pans (non représentée) qui y doit être introduite pour le réglage du serrage.

Ainsi, lorsque la clé de manoeuvre est introduite dans le trou à six pans 34 de l'organe d'enroulement 12, elle vient au contact de la goupille 35 et peut ensuite faire tourner l'organe d'enroulement pour le serrage. Pour le desserrage, il suffit d'exercer une force avec la clé contre la goupille 35 pour déplacer celle-ci le long de la fente 37 en repoussant l'anneau cranté 26 de manière à comprimer le ressort 30, et de maintenir le ressort comprimé tout en faisant tourner l'organe d'enroulement dans le sens inverse.

Les figures 11 et 12 montrent une variante du dispositif de verrouillage dans laquelle l'élément transversal 35 est sous forme d'une tige 35' en une seule pièce avec l'anneau cranté 26. La tige 35' s'étend diamétralement dans le trou central 27 de l'anneau cranté 26.

Afin de permettre l'enfilement de l'anneau cranté 26 sur l'organe d'enroulement 12, la fente diamétrale 37 est dans cette variante prolongée jusqu'à l'extrémité correspondante de l'organe d'enroulement 12.

La tige 35' est utilisée exactement de la même manière que la goupille 35, mais comme la tige est en une seule pièce avec l'anneau cranté, elle agit directement sur celui-ci en étant repoussée le long de la fente 37 à l'aide d'un outil introduit dans l'empreinte 27 pour débloquer le dispositif de verrouillage.

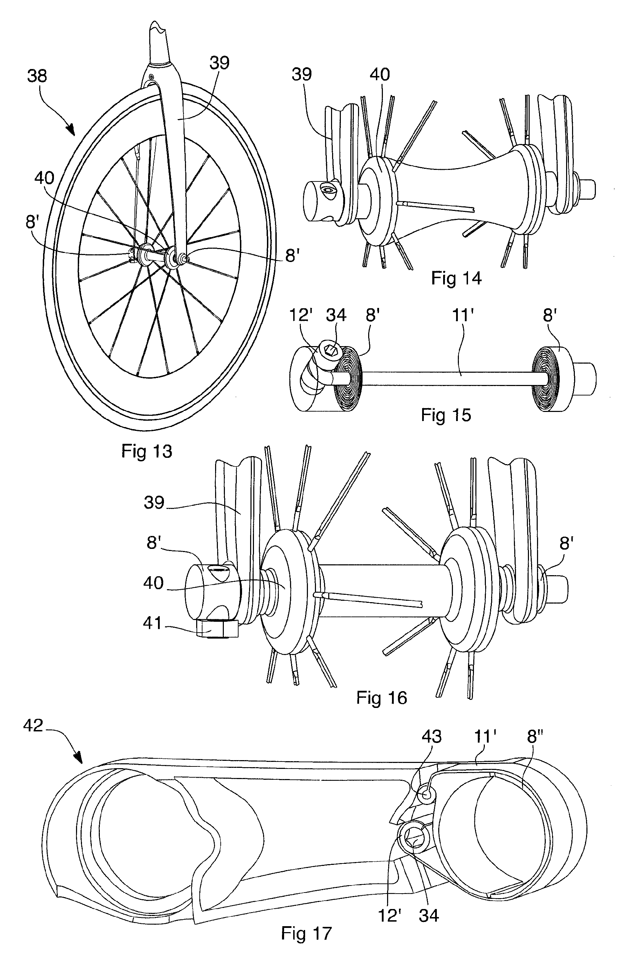

Les figures 13 à 16 illustrent une autre utilisation du dispositif de fixation détachable selon l'invention pour fixer une roue de cycle 38, ici une roue avant, à une fourche de cycle 39. Le dispositif de fixation peut bien entendu également être utilisé de la même manière pour la fixation d'une roue arrière.

Dans cette utilisation du dispositif de fixation selon l'invention, les moyens de serrage classique comprenant un axe s'étendant au travers du moyeu de cycle et portant à chaque extrémité des moyens de fixation ont été remplacés par un élément souple 11' s'étendant au travers du moyeu de cycle et dont une première des extrémités est reliée à un organe de serrage 8' et dont la deuxième extrémité est fixée à un organe d'enroulement 12' comprenant un corps cylindrique monté rotatif dans un deuxième organe de serrage 8' du même genre.

Les organes de serrage 8' sont disposés à l'extérieure d'une des branches respectives de la fourche 39. L'organe d'enroulement 12' de l'élément souple 11' est disposé dans le corps d'un des organes de serrage 8'.

Pour bloquer l'organe d'enroulement 12' dans une position souhaitée pour obtenir la fixation de la roue 38 par serrage, on peut utiliser un dispositif de blocage simplifié, comme par exemple à vis et à écrou 41.

La figure 17 illustre une autre utilisation du dispositif de fixation de l'invention pour fixer de manière détachable un guidon (non représenté) à l'une des extrémités d'une potence de cycle 42. La figure 17 montre une vue en perspective et en coupe longitudinale d'une potence qui à son extrémité avant porte des moyens de fixation du guidon. Ces moyens de fixation comportent un élément souple 11" sous forme d'une bande dont une des extrémités est fixée à la potence par des moyens de fixation 43 comportant un petit cylindre retenu dans la potence, et l'autre extrémité est fixée à un organe d'enroulement cylindrique 12" s'étendant dans le sens transversal du corps de potence et qui selon l'invention est monté rotatif dans celui-ci de manière à faire en outre fonction d'organe de serrage.

Pour bloquer l'organe d'enroulement 12" dans une position souhaitée pour obtenir la fixation d'un guidon par serrage, on peut également dans ce cas utiliser un dispositif de blocage simplifié, comme par exemple à vis et à écrou.

Bien entendu, l'invention n'est pas limitée aux exemples illustrés et décrits, mais peut être utilisée pour la fixation d'autres éléments de cycle.

## Revendications

1. Dispositif de fixation d'un élément de cycle détachable sur un cycle, comportant des moyens de serrage comprenant au moins un organe de serrage (8 ; 8' ; 8") déplaçable entre une position de serrage pour la fixation de l'élément de cycle (1 ; 38) et une position de desserrage pour la libération de l'élément de cycle, et des moyens de tension (11, 12 ; 11', 12' ; 11",12") comportant un élément souple (11 ; 11' ; 11") agissant sur ledit organe de serrage (8 ; 8' ; 8") pour le déplacement de celui-ci vers lesdites positions de serrage et de desserrage, **caractérisé en ce que** lesdits moyens de tension (11, 12 ; 11', 12' ; 11",12") comportent en outre un organe d'enroulement (12 ; 12' ; 12") de l'élément souple (11 ; 11' ; 11") auquel est fixée une extrémité dudit élément souple (11 ; 11'; 11"), ledit organe d'enroulement (12 ; 12' ; 12") étant apte à être mis en rotation dans un premier sens pour enrouler un tronçon de l'élément souple (11 ; 11' ; 11") autour de l'organe d'enroulement (12 ; 12' ; 12") et tirer ledit organe de serrage (8 ; 8' ; 8") vers la position de serrage, et en rotation dans un deuxième sens inverse du premier sens pour dérouler ledit tronçon et provoquer le déplacement dudit organe de serrage (8 ; 8' ; 8") vers la position de desserrage.

2. Dispositif de fixation selon la revendication 1, **caractérisé en ce que** ledit organe d'enroulement (12 ; 12' ; 12") est intégré dans ledit élément de cycle (1).

3. Dispositif de fixation selon la revendication 1 ou 2, **caractérisé en ce que** ledit organe d'enroulement (12 ; 12' ; 12") est un corps cylindrique.

4. Dispositif de fixation selon l'une quelconque des revendications précédentes, **caractérisé en ce que** l'élément souple (11) s'étend sur un palan (13) comprenant au moins un organe de renvoi (14) fixé sur ledit au moins un organe de serrage (8).

5. Dispositif de fixation selon l'une quelconque des revendications précédentes, **caractérisé en ce que** ledit organe d'enroulement (12) est associé à un dispositif de verrouillage disposé à une extrémité dite extérieure de l'organe d'enroulement et permettant de verrouiller l'organe d'enroulement (12) dans ladite position de serrage.

6. Dispositif de fixation selon la revendication 5, **caractérisé en ce que** ledit dispositif de verrouillage est un dispositif à cliquet.

7. Dispositif de fixation selon la revendication 6, **caractérisé en ce que** ledit dispositif à cliquet comporte un anneau cranté (26) monté solidaire en rotation avec l'organe d'enroulement (12) et pouvant venir en prise avec un évidement cranté (29) prévu dans un support d'extrémité (19) de l'organe d'enroulement (12) afin de verrouiller celui-ci dans ladite position de serrage.

8. Dispositif de fixation selon la revendication 7, **caractérisé en ce que** ledit anneau cranté (26) est constamment sollicité axialement par un moyen élastique (30) pour être en prise avec ledit évidement cranté (29), ledit moyen élastique (30) prenant d'une part appui sur un flasque (31) de l'organe d'enroulement (12) et d'autre part sur une face arrière dudit anneau cranté (26).

9. Dispositif de fixation selon la revendication 8, **caractérisé en ce que** ledit moyen élastique (30) est un ressort.

10. Dispositif de fixation selon la revendication 8 ou 9, **caractérisé en ce que** ledit anneau cranté (26) peut être déplacé axialement de sa prise avec ledit évidement cranté (29) par une force d'appui appliquée par un utilisateur sur la face avant dudit anneau cranté (26) de manière à comprimer ledit moyen élastique (30).

11. Dispositif de fixation selon la revendication 10, **caractérisé en ce que** ladite extrémité extérieure de l'organe d'enroulement (12) présente une empreinte de clé (34) apte à recevoir une clé pour l'application de ladite force d'appui sur un élément transversal (35) porté par l'anneau cranté (26).

12. Dispositif de fixation selon la revendication 11, **caractérisé en ce que** ledit élément transversal est une goupille (35) dont les extrémités sont logées dans deux évidements de réception diamétralement opposés (36) de l'anneau cranté (26) en s'étendant dans une fente (37) longitudinale traversant radialement ladite empreinte de clé (34) de l'organe d'enroulement (12).

13. Utilisation d'un dispositif de fixation selon au moins une des revendications précédentes, dans laquelle l'élément de cycle est une tige de selle devant être fixé sur un tube de selle (10) d'un cadre de cycle.

14. Utilisation d'un dispositif de fixation selon au moins une des revendications 1 à 12, dans laquelle l'élément de cycle est une roue de cycle (38) devant être fixé sur un cadre de cycle ou sur une fourche de cycle (39).

15. Utilisation d'un dispositif de fixation selon au moins une des revendications 1 à 12, dans laquelle l'élément de cycle est un guidon devant être fixé à une potence de cycle (42).

16. Utilisation d'un dispositif de fixation selon au moins une des revendications 1 à 12, dans laquelle l'élément de cycle est un élément de cycle quelconque devant être fixé de manière détachable à un cycle.
